# EUROPÄISCHE PATENTANMELDUNG

(11) **EP 3 098 639 A1**
(43) Veröffentlichungstag der Anmeldung: **30.11.2016**
(21) Anmeldenummer: 15169642.4
(22) Anmeldetag: 28.05.2015
(51) Int. Cl.: G02B 13/20

(54) **OBJEKTIV ZUR VERÄNDERBAREN EINSTELLUNG DER ABERRATIONEN**

(71) Anmelder: Lomographische AG, 1070 Wien (AT)
(72) Erfinder: Fiegl-Bibawy, Matthias, 1070 Wien (AT); Bibawy, Sally, 1070 Wien (AT)
(74) Vertreter: Torggler & Hofinger Patentanwälte

(57) **Zusammenfassung**

Objektiv zu veränderbaren Einstellung der Aberrationen, umfassend:
- eine erste Linsengruppe (LG1) mit einer ersten Linse (7) positiver Brechkraft und mit einer zweiten Linse (8) negativer Brechkraft,
- eine zweite Linsengruppe (LG2) mit einer ersten Linse (9) negativer Brechkraft und mit einer zweiten Linse (10) positiver Brechkraft, wobei die erste Linsengruppe (LG1) der Objektseite (O) zugewandt ist und die zweite Linsengruppe (LG2) der Bildseite (B) zugewandt ist,
wobei eine Verstellvorrichtung (15) vorgesehen ist, durch die der Abstand (d) zwischen der ersten Linsengruppe (LG1) und der zweiten Linsengruppe (LG2) veränderbar einstellbar ist.

## Beschreibung

Die vorliegende Erfindung betrifft ein Objektiv zur veränderbaren Einstellung der Aberrationen umfassend:
- eine erste Linsengruppe mit einer ersten Linse positiver Brechkraft und mit einer zweiten Linse negativer Brechkraft,
- eine zweite Linsengruppe mit einer ersten Linse negativer Brechkraft und mit einer zweiten Linse positiver Brechkraft, wobei die erste Linsengruppe der Objektseite zugewandt ist und die zweite Linsengruppe der Bildseite zugewandt ist.

Die in der Fotografie zwangsläufig entstehenden Aberrationen von Objektiven, also Abbildungsfehler, wie z.B. sphärische Aberration, Astigmatismus, Koma, Bildfeldwölbung oder Verzeichnung, sollen in der modernen Fotografie durch spezielle Auswahl und Anordnung von Linsensystemen weitgehend vermieden oder korrigiert werden, um ein möglichst scharfes Bild über den gesamten Bildbereich zu erhalten. Dabei werden meist mehrere Linsen aus verschiedenen Glassorten miteinander kombiniert und so aufeinander abgestimmt, dass die gemeinsame Auswirkung aller Abbildungsfehler minimiert wird. Eine gänzliche Vermeidung oder Korrektur dieser Abbildungsfehler ist aber grundsätzlich nicht realisierbar.

Andererseits sind im Stand der Technik Objektive bekannt, bei denen bewusst die Unschärfe von Bereichen außerhalb des scharfen Bereichs um den Fokus durch Veränderung der Aberrationen in einer anderen Bildqualität dargestellt werden. Diese Veränderungen sind gestalterischer Art, wobei die ästhetische Qualität dieser Veränderungen gemeinhin als Bokeh bezeichnet wird. Insbesondere bei der Portraitfotografie wird der Hintergrund bewusst unscharf gehalten, um die Ablenkung des Betrachters vom Hauptmotiv möglichst gering zu halten. Ähnliches gilt für die unscharfen Bereiche im Vordergrund des Motivs. Die Darstellung und der damit verbundene Qualitätseindruck der unscharfen Bereiche, und somit das Bokeh, ist bei Objektiven unterschiedlicher Bauart stets verschieden. Um insbesondere bei Portrait-Fotos den bei jeder Aufnahme unterschiedlichen Gegebenheiten Rechnung zu tragen sind häufig als Weichzeichnerobjektive bezeichnete Objektive entwickelt worden, bei denen die Unschärfe durch Variation der Aberration, insbesondere der sphärischen Aberration, verändert wird.

Die US 5,841,590 betrifft ein Objektiv mit einer ersten Linsengruppe bestehend aus sechs Linsen und einer zweiten Linsengruppe bestehen aus zwei Linsen. Der Abstand der zwei Linsen der zweiten Linsengruppe ist veränderlich, wodurch die sphärische Aberration einstellbar ist und dadurch die Anschauung oder der Eindruck des Bildes durch Veränderungen der Unschärfe im Hintergrund oder im Vordergrund verändert werden kann, ohne die Auflösung und den Kontrast des Motivs im Fokus zu verändern. Dabei wird hauptsächlich der Kontrast der unscharfen Bereiche verringert, indem die das Bokeh bildenden Zerstreuungskreise weniger scharf abgegrenzt sind. Dadurch ist das Bokeh nur in einem geringen Ausmaß veränderbar. Nachteilig ist weiters der komplizierte Aufbau des Objektivs.

Aufgabe der vorliegenden Erfindung ist es daher, die obigen Nachteile zu vermeiden, indem ein alternatives Objektiv zur Verfügung gestellt wird, mit dem eine umfassendere Veränderung des Eindrucks des Unschärfebereichs mit einfachen Mitteln erreicht werden kann, während der scharfe Bereich um den Fokus im Wesentlichen unverändert bleibt.

Dies wird durch ein Objektiv mit den Merkmalen des Anspruchs 1 erreicht.

Durch die objektseitig angeordnete erste Linsengruppe bestehend aus einer ersten Linse mit positiver Brechkraft und einer zweiten Linse mit negativer Brechkraft und einer bildseitig angeordneten zweiten Linsengruppe bestehend aus einer ersten Linse negativer Brechkraft und einer zweiten Linse positiver Brechkraft werden Fotografien erzeugt, die einen scharfen Bereich mit sehr gutem Kontrast aufweisen. Dabei ist unter der objektseitigen und der bildseitigen Anordnung zu verstehen, dass jene Linsengruppe, die der Objektseite zugewandt ist, also objektseitig angeordnet ist, im betriebsgemäßen Gebrauch näher am Objekt ist, als jene Linsengruppe, die der Bildseite zugewandt ist, also bildseitig angeordnet ist. Die bildseitig angeordnete Linsengruppe ist im montierten Zustand daher dem Film beziehungsweise dem Bildsensor der Kamera zugewandt, wo das Bild entsteht und aufgezeichnet wird. Aufgrund fehlender Korrekturlinsen liegt konstruktionsbedingt eine signifikante Bildfeldwölbung, Verzeichnung sowie Koma und Astigmatismus vor. Diese Aberrationen sind für Portraits jedoch von Vorteil, da sie dem Betrachter helfen, sich auf den scharf gestellten Bereich des Bildes zu konzentrieren. Dies gilt insbesondere für jene Ausführungsform der Erfindung, bei der die erste Linsengruppe und die zweite Linsengruppe aus jeweils zwei Linsen bestehen.

Indem eine Verstellvorrichtung vorgesehen ist, durch die der Abstand der ersten Linsengruppe von der zweiten Linsengruppe veränderbar einstellbar ist, hat sich überraschend herausgestellt, dass das Bokeh der mit dem erfindungsgemäßen Objektiv aufgenommenen Fotos mechanisch einfach und dabei in ästhetisch angenehmer Weise umfassend veränderbar ist. Dabei kann die Verstellvorrichtung einen drehbar am Gehäuse gelagerten Verstellring umfassen, mit dem der Abstand der ersten von der zweiten Linsengruppe verändert werden kann. Mit einer solchen Linsenanordnung ist es möglich, die Koma und den Astigmatismus im Unschärfebereich veränderbar einzustellen, während der scharfe Bereich des Bildes nicht oder nur unwesentlich verändert wird. Dies betrifft insbesondere ein im Zentrum des Bildes scharf gestelltes Motiv.

Dabei hat sich ferner überraschend herausgestellt, dass mit dem erfindungsgemäßen Objektiv ein verwirbeltes Bokeh ("swirly bokeh") entsteht, welches den Eindruck eines auf das scharfe Zentrum gerichteten Wirbels vermittelt, wodurch die Aufmerksamkeit des Betrachters noch stärker auf das scharfe Zentrum gelenkt wird. Mit der Veränderung des Abstands zwischen der ersten Linsengruppe und der zweiten Linsengruppe wird das Ausmaß der Verwirbelung des Bokehs verändert, sodass der Eindruck eines stärker oder schwächer verwirbelten beziehungsweise stärker oder schwächer drehenden Bokehs vermittelt wird. Gleichzeitig werden die Auflösung und der Kontrast eines Objekts im Fokus und damit die Darstellung des Motivs im scharfen Bereich nur unwesentlich geändert.

Durch eine veränderbare Einstellung der Koma und des Astigmatismus, die in herkömmlichen Objektiven zumeist gänzlich korrigiert werden, entsteht eine vollkommen andere Möglichkeit zur Veränderung des Eindrucks des unscharfen Bereichs, wobei diese Veränderungen als ästhetisch empfunden werden. Indem der Astigmatismus nicht korrigiert, sondern nur auf einen anderen Wert eingestellt wird, ergibt sich der Eindruck des stärker oder schwächer verwirbelten Bokehs. Indem die Koma nicht korrigiert, sondern auf einen anderen Wert eingestellt wird, kann das Bokeh so auf das scharfe Zentrum gerichtet sein, dass der Eindruck einer Vergrößerung des scharfen Zentrums entsteht (Zoom-Burst-Effekt).

Weitere vorteilhafte Ausführungen der Erfindung sind in den abhängigen Ansprüchen definiert.

In einer Ausführungsform der Erfindung ist die zweite Linsengruppe während der Veränderung des Abstandes zur ersten Linsengruppe im Objektiv fixiert, während die erste Linsengruppe im Objektiv von der Verstellvorrichtung entlang der Längsrichtung des Objektivs verschoben wird.

In einer bevorzugten Ausführungsform der Erfindung weist das Objektiv eine zweite Verstellvorrichtung auf, mit der der Fokus zum Scharfstellen eingestellt werden kann, wobei die erste Linsengruppe und die zweite Linsengruppe von der zweiten Verstellvorrichtung gleichzeitig und im gleichen Ausmaß relativ zum Gehäuse des Objektiv bewegt werden.

In einer bevorzugten Ausführungsform der Erfindung sind die erste Linse und die zweite Linse der zweiten Linsengruppe zu einer Doppellinse (Dublett) verbunden, die einen sogenannten verkitteten Achromat bilden. Die erste Linse und die zweite Linse der ersten Linsengruppe können dem gegenüber beabstandet voneinander angeordnet sein, wobei in einer Ausführungsform der Abstand der ersten Linse und der zweiten Linse der ersten Linsengruppe unveränderlich ist.

Die erste Linse der ersten Linsengruppe weist eine positive Brechkraft auf und ist in einer Ausführungsform der Objektseite zugewandt. Die erste Linse der zweiten Linsengruppe weist eine negative Brechkraft auf und ist in einer Ausführungsform der Erfindung der Objektseite zugewandt. Ferner kann die erste Linse der zweiten Linsengruppe als Meniskus ausgebildet sein, die zweite Linse der zweiten Linsengruppe als bikonvexe Sammellinse, die erste Linse der ersten Linsengruppe als plankonvexe Sammellinse und die zweite Linse der ersten Linsengruppe als plankonkave Zerstreuungslinse.

Ein Objektiv, bei dem die zweite Linsengruppe ein verkitteter Achromat ist, wobei die Linse negativer Brechkraft objektseitig angeordnet ist, und die erste Linsengruppe ein Achromat bestehend aus einer objektseitig angeordneten plankonvexen Linse positiver Brechkraft und einer davon beabstandet angeordneten plankonkaven Linse negativer Brechkraft ist, ist im Stand der Technik auch als Petzval-Linse bekannt. Bei dieser Ausgestaltung hat die erste Linsengruppe ebenfalls die Funktion eines Achromaten, der gemeinsam mit dem verkitteten Achromaten der zweiten Linsengruppe zur Korrektur der sphärischen Aberration dient.

In einer anderen Ausführungsform der Erfindung sind die erste und die zweite Linsengruppe als klassische Petzval-Linse ausgebildet, wobei ein verkitteter Achromat bestehend aus einer bikonvexen Linse und einer plankonkaven Linse negativer Brechkraft als erste Linsengruppe der Objektseite zugewandt ist, wobei die Linse positiver Brechkraft objektseitig angeordnet ist und eine Meniskuslinse negativer Brechkraft und davon beabstandet eine bikonvexe Linse positiver Brechkraft als zweite Linsengruppe angeordnet ist, wobei die Meniskuslinse objektseitig angeordnet ist.

Bei der Veränderung des Abstands der ersten Linsengruppe von der zweiten Linsengruppe hat sich ferner herausgestellt, dass stets eine Vignettierung des Bildes vorhanden ist. Durch eine solche Abschattung zum Rand hin wird die Aufmerksamkeit des Betrachters zusätzlich zum Zentrum des Bildes gelenkt.

In einer besonders bevorzugten Ausführungsform der Erfindung ist zwischen der ersten Linsengruppe und der zweiten Linsengruppe eine Aperturblende angeordnet, die auswechselbar sein kann.

Das Bokeh wird maßgeblich durch das Aussehen der Zerstreuungskreise bestimmt, die dadurch entstehen, dass in unscharfen Bereichen jeder Punkt des Lichts scheibenförmig abgebildet wird und dabei die Form der Blende annimmt. Dabei kann der Zerstreuungskreis gleichmäßig erleuchtet oder in der Nähe des Bildrandes oder im Bildzentrum heller sein. Durch auswechselbare Blenden mit verschiedener Öffnungsform, z.B. sternförmig, kreisrund oder rechteckig, können weitere als ästhetisch empfundene Effekte im Unschärfebereich erzeugt werden.

Der Abstand der ersten Linsengruppe von der zweiten Linsengruppe kann stufenweise verstellbar sein, wobei vorgesehen sein kann, den Abstand in einem Ausmaß zwischen 10 und 20 mm, vorzugsweise zwischen 12 und 16 mm, ganz vorzugsweise in einem Ausmaß von 12 mm, zu verändern.

Weitere Einzelheiten und Vorteile der vorliegenden Erfindung werden anhand der Figurenbeschreibung unter Bezugnahme auf die Zeichnungen im Folgenden näher erläutert. Darin zeigen:
- Fig. 1a - 1e: verschiedene Ansichten eines erfindungsgemäßen Objektivs,
- Fig. 2: eine schematische Darstellung eines Querschnitts der ersten und der zweiten Linsengruppe eines erfindungsgemäßen Objektivs,
- Fig. 3a - 3g: eine schematische Darstellung zur Einstellung des veränderbaren Abstands der ersten Linsengruppe von der zweiten Linsengruppe,
- Fig. 4a und 4b: perspektivische Ansichten einer schematischen Darstellung der ersten und zweiten Linsengruppe mit dazwischen angeordneter auswechselbarer Blende,

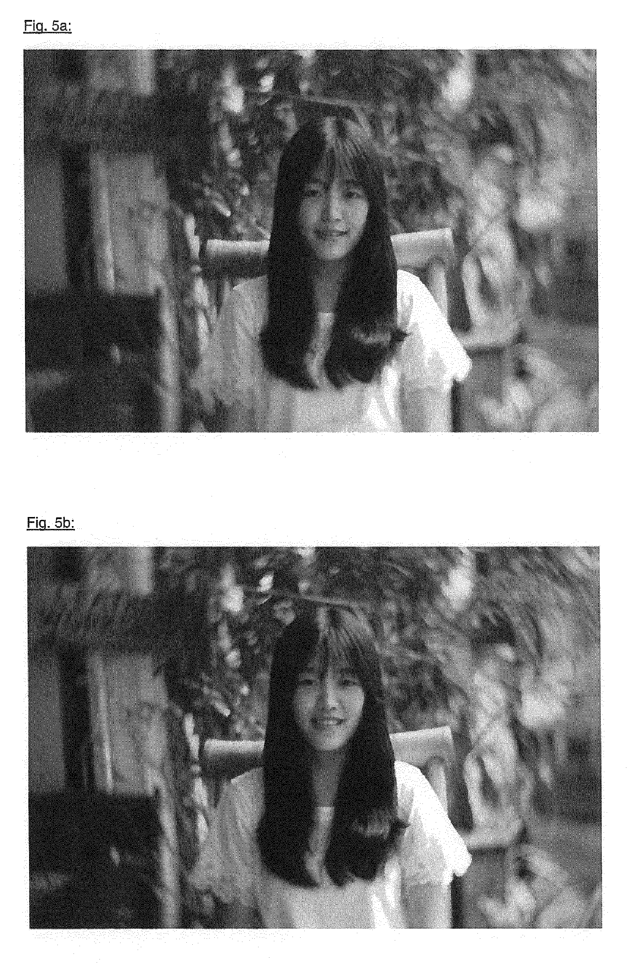

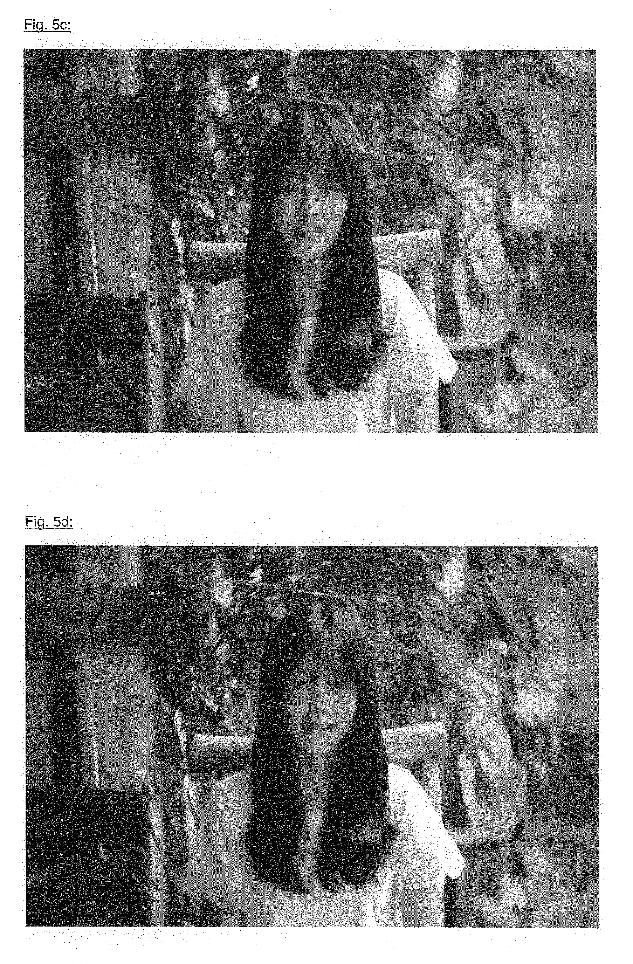

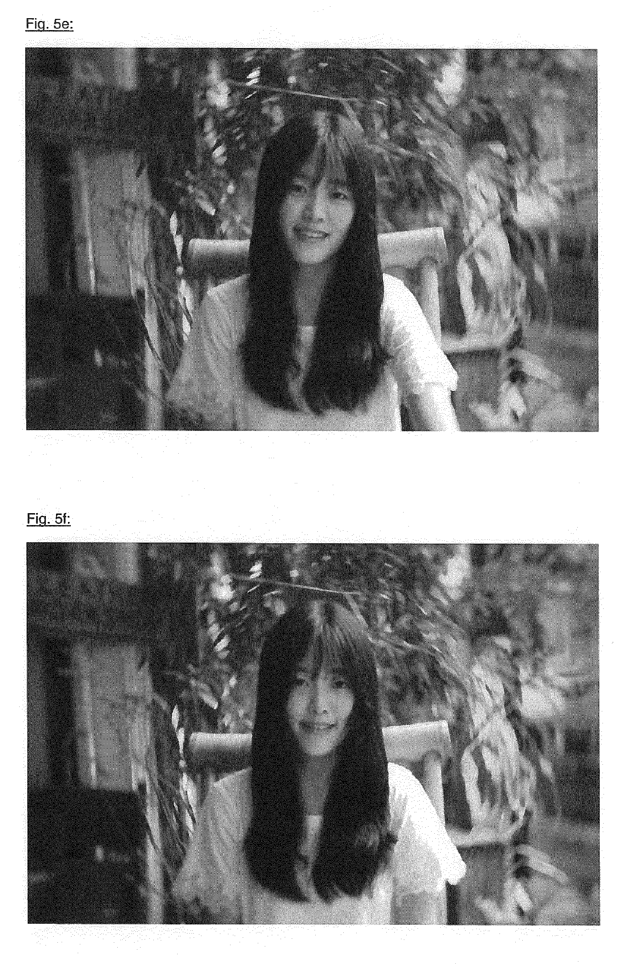

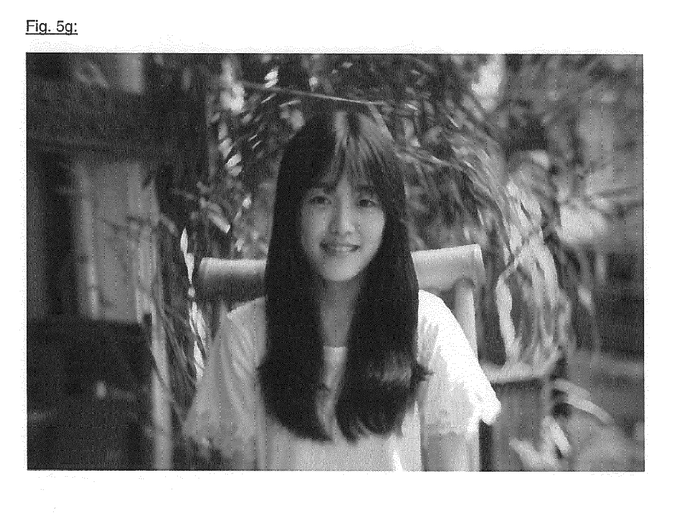

- Fig. 5a - 5g: Fotografien, aufgenommen bei unterschiedlichem Abstand der ersten Linsengruppe von der zweiten Linsengruppe,
- Fig. 6a - 6g: MTF-Diagramme zum erfindungsgemäßen Objektiv bei einer Blendenzahl f/1.9 für verschiedene Abstände der ersten Linsengruppe von der zweiten Linsengruppe,
- Fig. 7a - 7g: MTF-Diagramme zum erfindungsgemäßen Objektiv bei einer Blendenzahl f/16 für verschiedene Abstände der ersten Linsengruppe von der zweiten Linsengruppe und
- Fig. 8: eine aufgeschnittene Darstellung des Objektivs 1 in perspektivischer Ansicht.

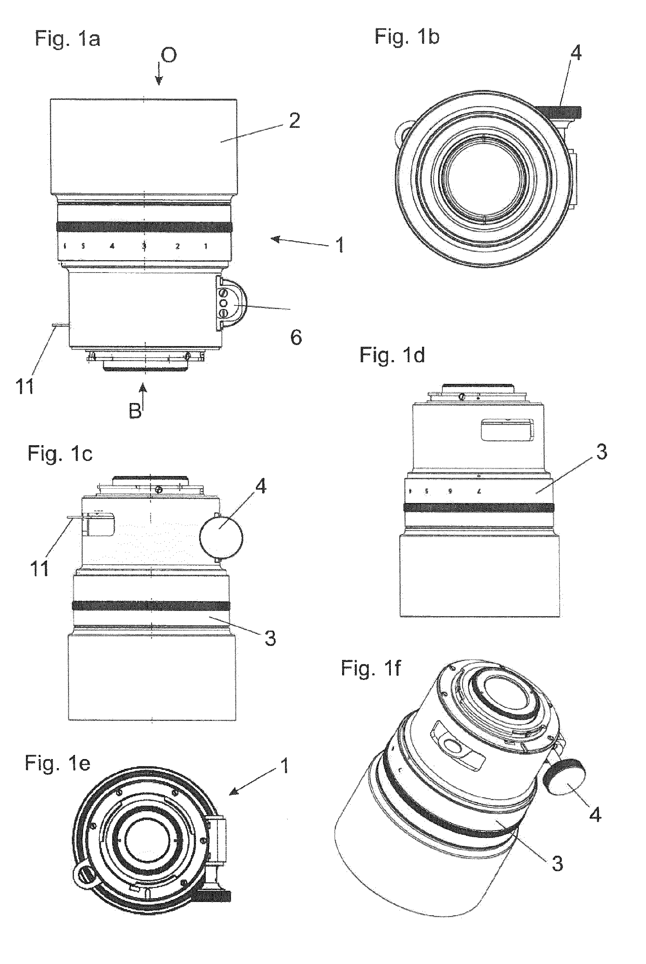

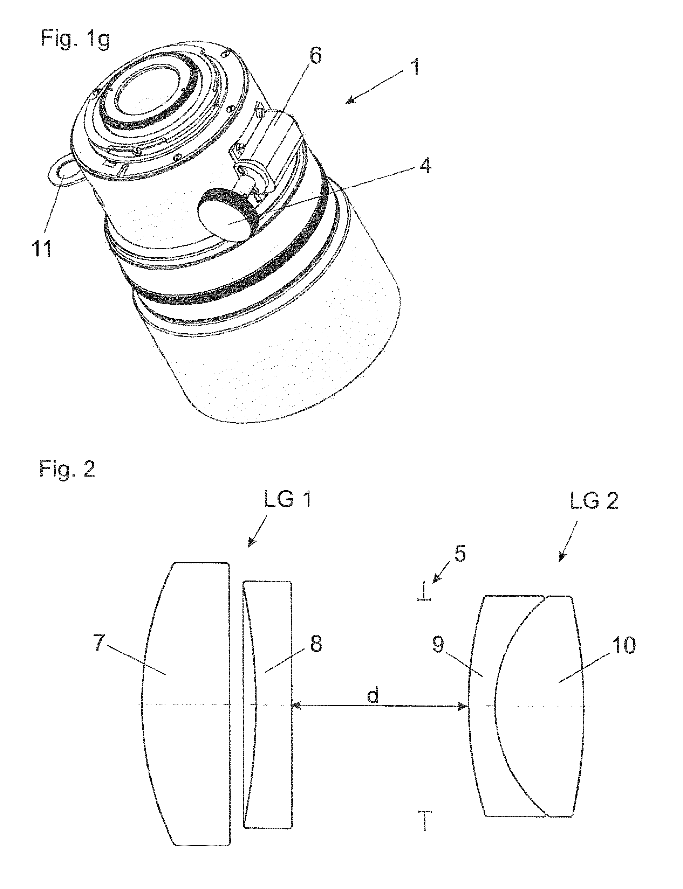

In den Figuren 1a bis 1e sind verschiedene Ansichten eines erfindungsgemäßen Objektivs 1 gezeigt, wobei die erste Linsengruppe LG1 und die zweite Linsengruppe LG2 bewegbar im Inneren des Gehäuses 2 gelagert sind. Dabei ist die erste Linsengruppe LG1 der Objektseite O zugewandt, während die zweite Linsengruppe LG2 der Bildseite B zugewandt ist. Das Objektiv 1 wird mit der Bildseite B an eine Kamera angeschlossen.

Durch eine Verstelleinrichtung 15 ist der Abstand der ersten Linsengruppe LG1 zur zweiten Linsengruppe LG2 veränderbar einstellbar. Dabei dient ein Drehring 3 zur Verschiebung der ersten Linsengruppe LG1 im Gehäuse 2, während die zweite Linsengruppe LG2 fixiert ist.

Durch eine zweite Verstelleinrichtung 6 umfassend ein Stellrad 4 wird die erste Linsengruppe LG1 und die zweite Linsengruppe LG2 gleichzeitig relativ zum Gehäuse 2 bewegt, wobei der Abstand der ersten Linsengruppe LG1 von der zweiten Linsengruppe LG2 unveränderlich gehalten wird. Diese Verstellung dient zum Scharfstellen, wobei der Fokus des Objektivs 1 geändert wird.

Zwischen der ersten Linsengruppe LG1 und der zweiten Linsengruppe LG2 ist eine auswechselbare Aperturblende 5 angeordnet, mit der einerseits die zur Bildebene gelangende Lichtmenge bestimmt wird und andererseits die Form der Zerstreuungskreise im Unschärfebereich. Ein Griff 11 dient zum Herausziehen der Aperturblende 5.

In der in Figur 2 in einer schematischen Querschnittsabbildung dargestellten Ausführungsform umfasst die der Objektseite zugewandte erste Linsengruppe LG1 eine der Objektseite O zugewandte plankonvexe Sammellinse 7, wobei die gekrümmte Oberfläche objektseitig angeordnet ist, und eine beabstandet angeordnete zweite Linse 8 in Form einer plankonvexen Zerstreuungslinse, wobei die gekrümmte Oberfläche objektseitig angeordnet ist. Bildseitig schließen sich an die erste Linsengruppe LG1 die Aperturblende 5 und die zweite Linsengruppe LG2 in Form einer verkitteten Doppellinse, wobei eine erste Linse 9 mit negativer Brechkraft der Objektseite O zugewandt ist und in Form einer Meniskuslinse ausgebildet ist, während die zweite Linse 10 der Bildseite B zugewandt ist und in Form einer bikonvexen Sammellinse ausgebildet ist.

In einer Ausführungsform sind die Linsen derart ausgebildet und angeordnet, dass die Brennweite des Objektivs 50 mm beträgt. Das Objektiv 1 kann sowohl mit Analogkameras, wie beispielsweise APS-C-Kameras oder Spiegelreflexkameras, als auch mit Digitalkameras verwendet werden, wobei an der Bildseite B Anschlüsse vorgesehen sind, mit denen das Objektiv 1 mit herkömmlichen Kameras, beispielsweise über Canon® EF-Anschlüsse oder Nikon® F-Anschlüsse, verbunden werden kann.

In einem Ausführungsbeispiel beträgt die geringste Distanz, an der ein scharfes Bild erzeugt werden kann, 0,6 m. Der geringste Bildkreis (minimum circle image) beträgt 32 mm. Die Schnittweite (back focal length) mehr als 42 mm. Die Aperturblende 5 ist auswechselbar, wobei beispielsweise Aperturblenden 5 mit Blendenzahlen f/1.9, f/2.8, f/4, f/5.6, f/8, f/11 und f/16 verwendet werden können, beispielsweise sogenannte Waterhouse Aperturblenden.

Die Linsen sind, wie im Stand der Technik bekannt, beschichtet, um Reflexionen zu vermeiden. Aus Gründen der Übersichtlichkeit sind Filter, Streulichtblenden, Abschlusskappen und dergleichen mehr nicht dargestellt.

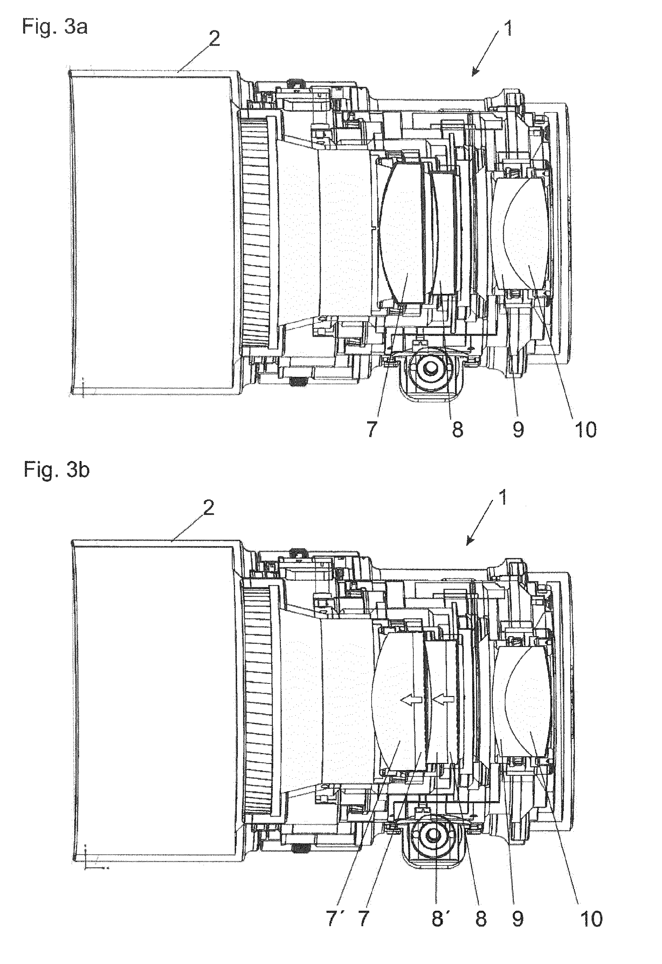

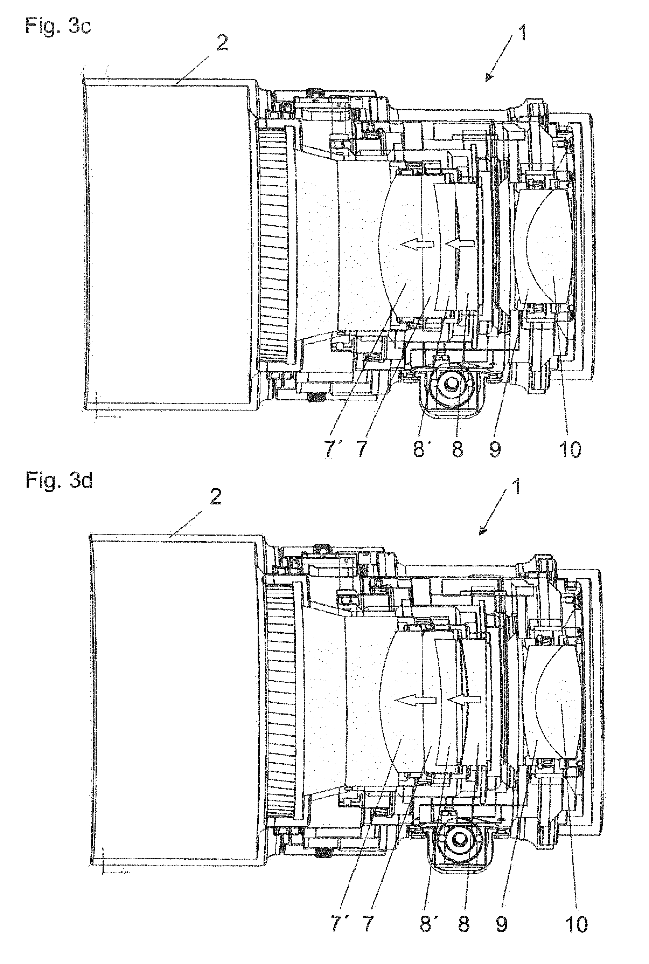

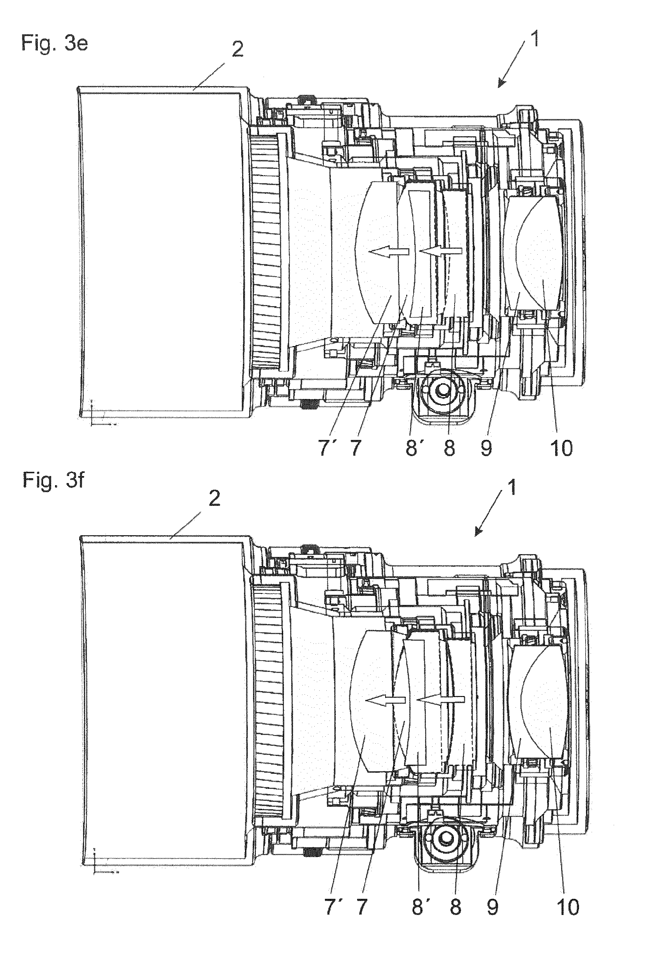

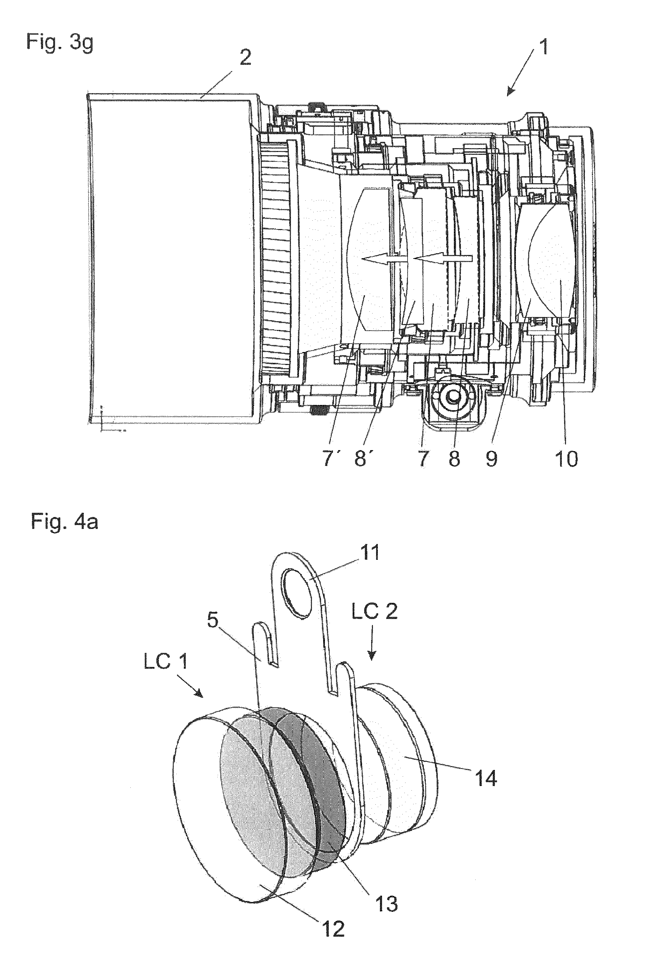

Durch Drehung des Drehrings 3 kann in einer Ausführungsform der Erfindung die erste Linsengruppe LG1 in sieben Schritten vom Ausgangsabstand d um jeweils 2 mm in Richtung der Objektseite O, also insgesamt um 12 mm, verschoben werden. Dies ist in den schematischen Darstellungen der Figuren 3a bis 3g gezeigt. Dabei ist die Verschieberichtung der Linsen 7, 8 in den Figuren 3b bis 3g entlang der Längsrichtung des Objektivs 1 mit Pfeilen dargestellt, wobei die ursprüngliche Position der Linsen 7, 8 durch die mit gestrichelten Linien dargestellten Linsen 7,8 gekennzeichnet ist. Während der Verschiebung der ersten Linsengruppe LG1 bleibt die zweite Linsengruppe LG2 im Objektiv 1 fixiert. Während das Bild des im Fokus des Objektivs 1 befindlichen Motivs durch die Veränderung des Abstands d der ersten Linsengruppe LG1 von der zweiten Linsengruppe LG2 nicht oder nur unwesentlich verändert wird und weiterhin scharf bleibt, erfährt der Unschärfebereich im Vordergrund und im Hintergrund des Motivs durch die Abstandsveränderung eine Veränderung, wobei das bei einer Linsenanordnung gemäß der Erfindung gegebene, verwirbelte Bokeh bei einer Verschiebung der ersten Linsengruppe LG1 von einem kleineren Abstand zur zweiten Linsengruppe LG2 zu einem größeren Abstand zur zweiten Linsengruppe LG2 aufgrund der Veränderungen der Koma und des Astigmatismus einen immer stärker drehenden Eindruck vermittelt, der sich beim größten Abstand zu einem tunnelartigen Eindruck verstärkt, wodurch die Aufmerksamkeit des Betrachters zwangsläufig auf den scharfen Bereich und das dort befindliche Motiv gelenkt wird. Das Bokeh bekommt während der Abstandsveränderung einen immer stärker drehenden Eindruck. Während der gesamten Verstellung ergibt sich eine optische Vignettierung. Durch diese Abschattung zum Bildrand hin wird ebenfalls ein bildmittig angeordnetes Motiv betont.

In einer Ausführungsform der Erfindung ergeben sich für die unterschiedlichen Abstände der ersten Linsengruppe LG1 von der zweiten Linsengruppe LG2 folgende Werte:

| **Abstand** | **Bildwinkel** | **Brennweite** | **Schnittweite** | **Maximum Brennweiten-regulierung** |
|---|---|---|---|---|
| d | 43,5° | 56,8 mm | 39,72 mm | 116,41 µm |
| d + 2 mm | 43,0° | 57,3 mm | 39,53 mm | 111,93 µm |
| d + 4 mm | 42,4° | 57,9 mm | 39,35 mm | 107,50 µm |
| d + 6 mm | 41,9° | 58,4 mm | 39,16 mm | 103,03 µm |
| d + 8 mm | 41,4° | 59,0 mm | 38,96 mm | 98,75 µm |
| d + 10 mm | 40,9° | 59,6 mm | 38,76 mm | 94,37 µm |
| d + 12 mm | 40,4° | 60,2° | 38,56 mm | 90,20 µm |

Anhand dieser Werte ist erkennbar, dass sich Brennweite und Schnittweite und damit der scharfe Bereich des Bildes während der Veränderung des Abstandes der ersten Linsengruppe LG1 von der zweiten Linsengruppe LG2 nur geringfügig ändern. Der Bildwinkel wird dabei etwas geringer.

Die Bilder 5a bis 5g zeigen Aufnahmen für jede der sieben Stufen des stufenförmig veränderbaren Abstands d der ersten Linsengruppe LG1 von der zweiten Linsengruppe LG2. Deutlich erkennbar ist der stärker drehende Eindruck des Bokehs.

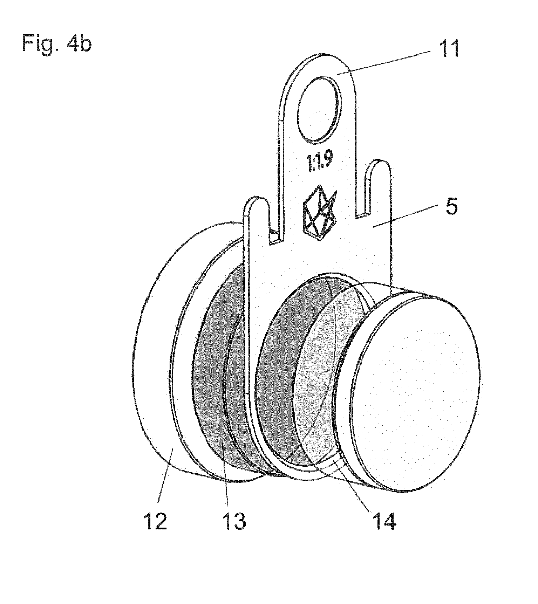

Die Figuren 4a und 4b zeigen in einer perspektivischen Ansicht eine schematische Darstellung der ersten Linsengruppe LG1, wobei die Fassungen 12 und 13 der ersten Linse 7 und der zweiten Linse 8 der ersten Linsengruppe LG1 erkennbar sind.

Da die erste Linse 9 und die zweite Linse 10 der zweiten Linsengruppe LG2 zu einem Achromat verkittet sind, benötigt die zweite Linsengruppe LG2 nur eine Fassung 14. Zwischen den Fassungen 12, 13 und 14 ist die Aperturblende 5 mit Griff 11 zur Auswechslung angeordnet.

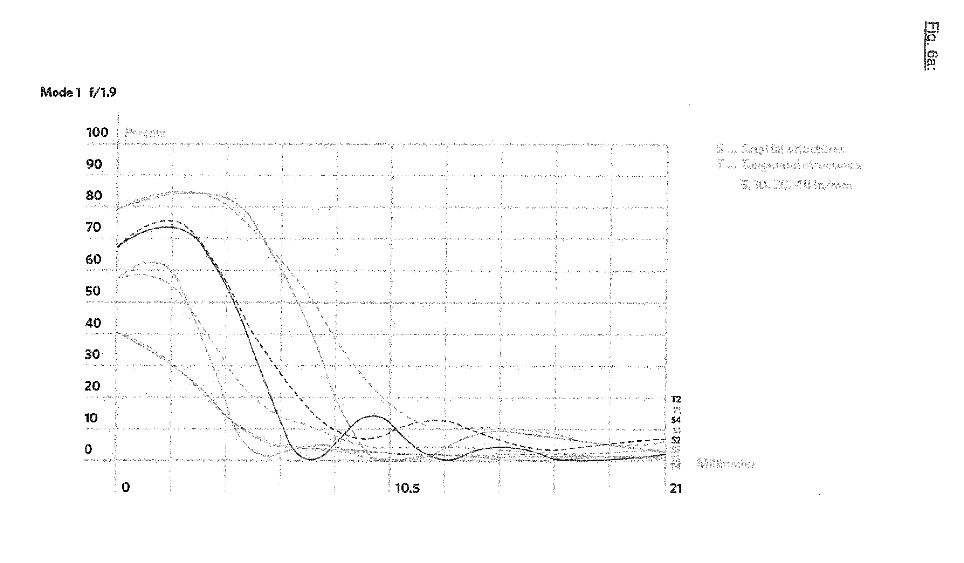

Die Figuren 6a bis 6g zeigen MTF-Diagramme für ein erfindungsgemäßes Objektiv 1 mit einer Aperturblende 5 mit Blendenzahl f/1.9, bei dem der Abstand d der ersten Linsengruppe LG1 zur zweiten Linsengruppe LG2 um jeweils 2 mm vergrößert wird. Die MTF-Diagramme sind dabei jeweils für die volle Öffnung und für große Aufnahmeentfernungen (Fokus auf unendlich) angegeben. Auf der Ordinate ist der Kontrast in Prozent aufgetragen, während auf der Abszisse die Entfernung von der Bildmitte in Millimeter aufgetragen ist. Im vorliegenden Fall beträgt der Bildsensor 24 mm x 36 mm, sodass die Diagonale rund 42 mm lang ist. In jedem Diagramm sind vier durchgezogene Kurven S1, S2, S3 und S4 für sagittale Strukturen und vier strichlierte Kurven T1, T2, T3 und T4 für tangentiale Strukturen bei weißem Licht aufgetragen. Dabei ist der Kontrast bei den Kurven S1, T1 für eine Auflösung 5 Ip/mm, bei den Kurven S2, T2 für 10 Ip/mm, bei den Kurven S3, T3 für 20 Ip/mm und bei den Kurven S4, T4 für 40 Ip/mm. Aus diesem Grund geben die Kurven S1, T1 und S2, T2 einen Eindruck über das Kontrastverhalten für gröbere Objektstrukturen, während die Kurven S3, T3 und S4, T4 das Auflösungsvermögen feiner und feinster Objektstrukturen dokumentieren.

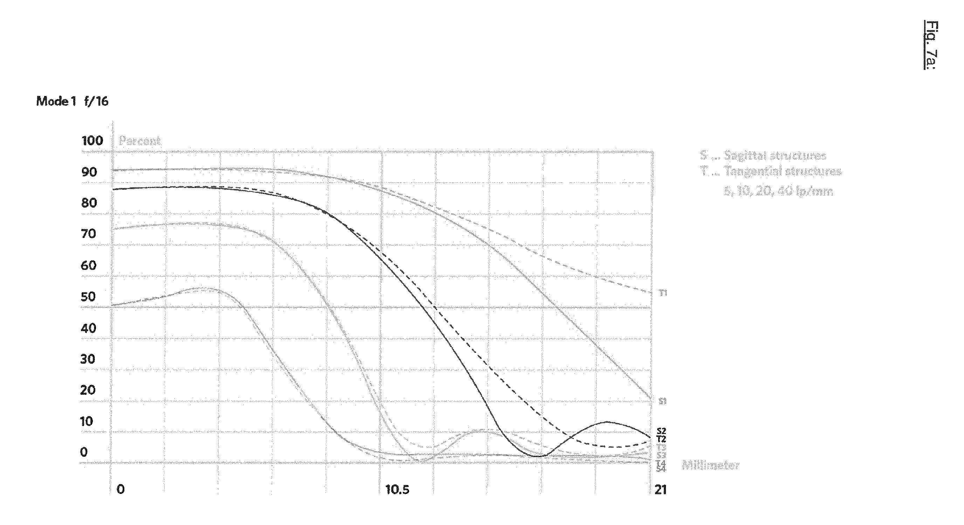

Die Figuren 7a bis 7g entsprechen den Figuren 6a bis 6b, allerdings bei einer Blendenzahl f/16.

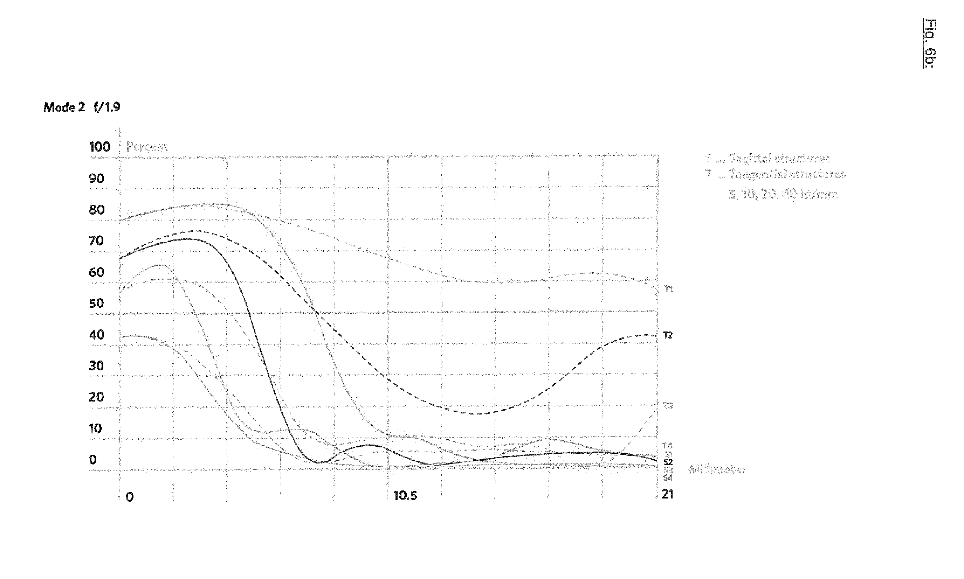

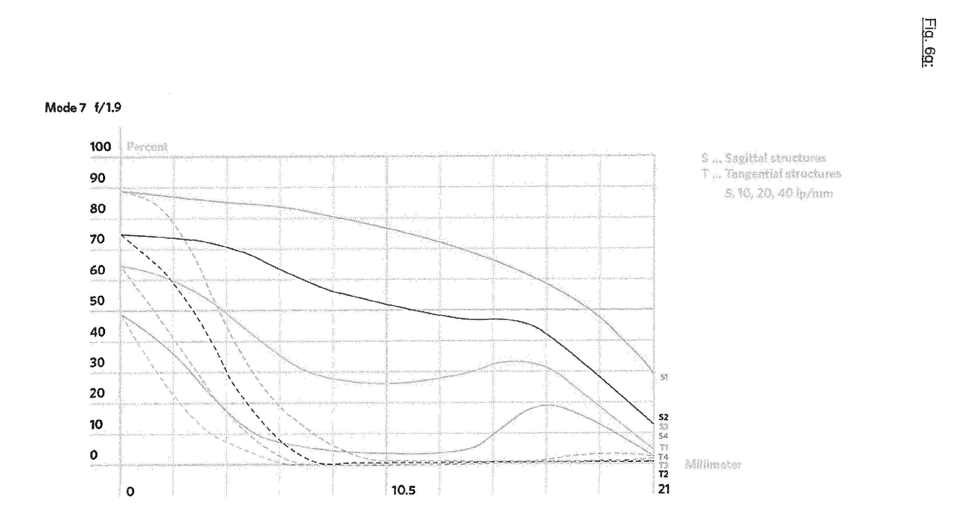

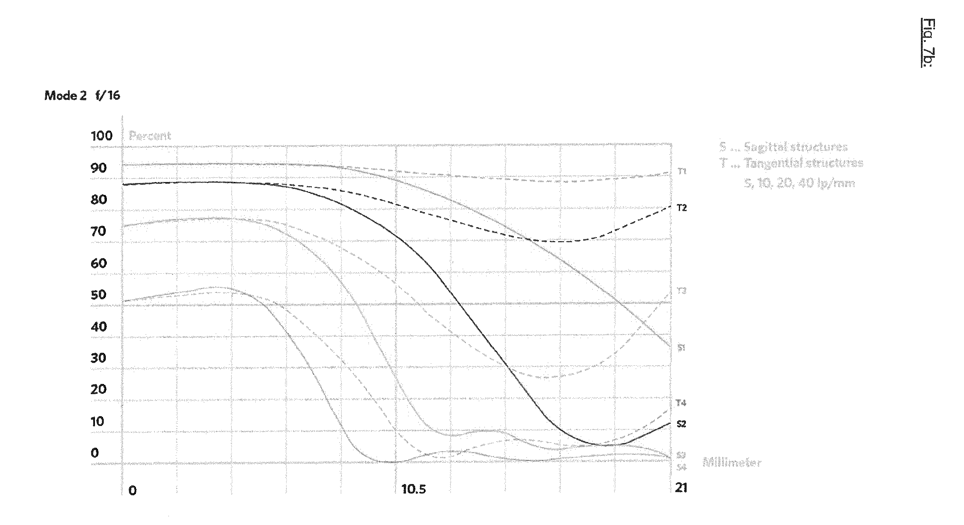

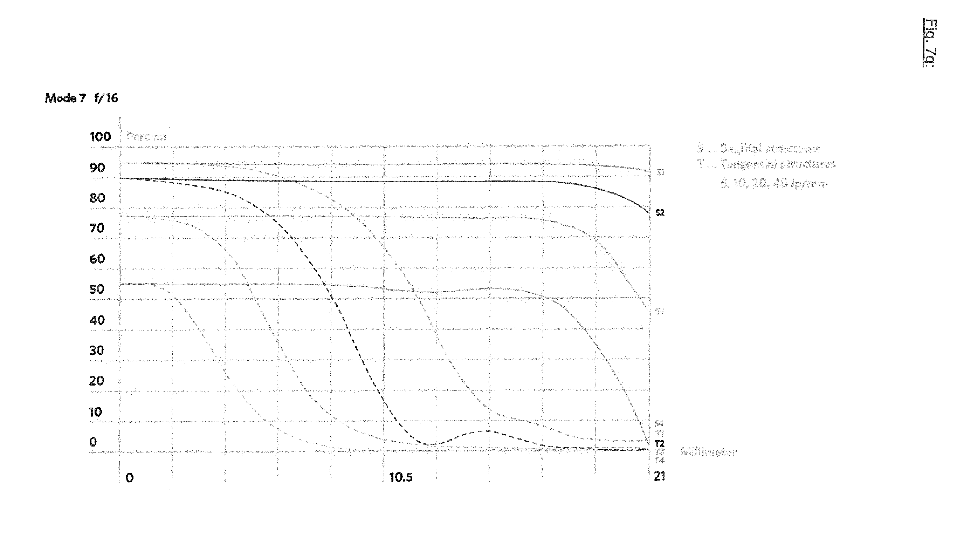

Bei den Figuren 6a, 7a liegt der kleinste Abstand zwischen der ersten Linsengruppe LG1 und der zweiten Linsengruppe LG2 vor. Bei den nachfolgenden Figuren 6b, 7b,... wächst dieser Abstand um jeweils zwei mm, bis bei den Figuren 6g, 7g der Abstand um insgesamt 12 mm angewachsen ist.

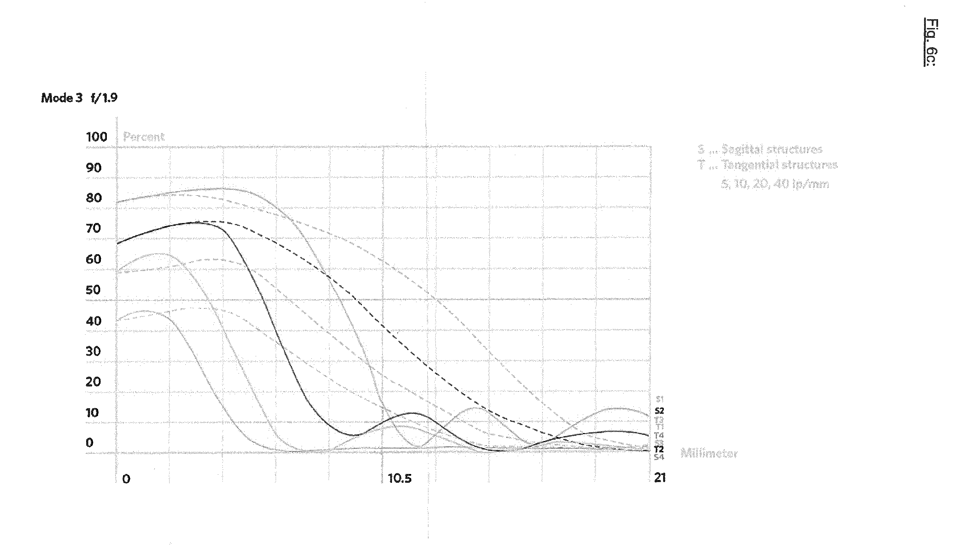

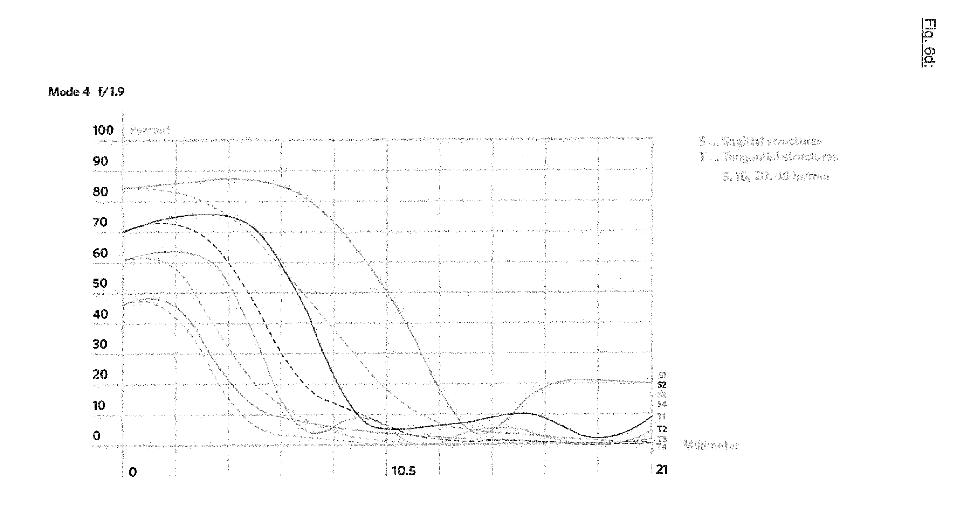

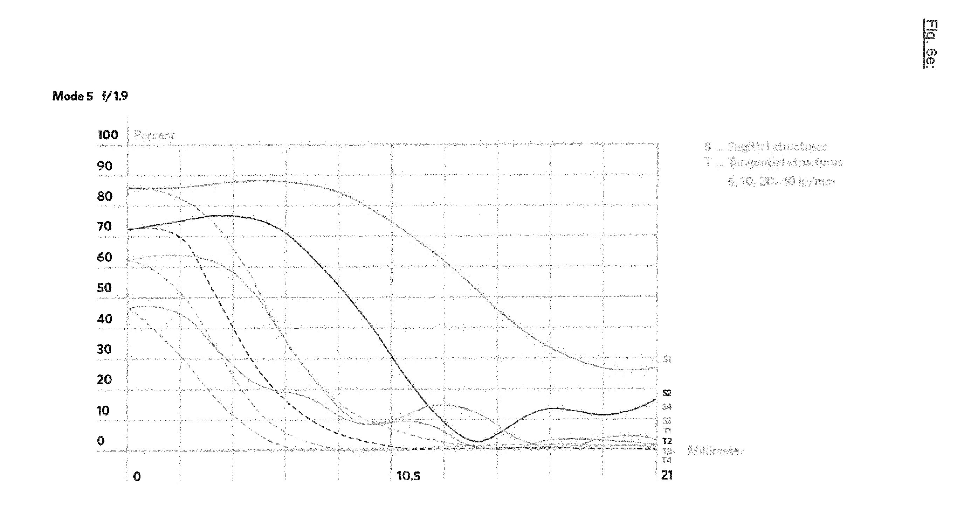

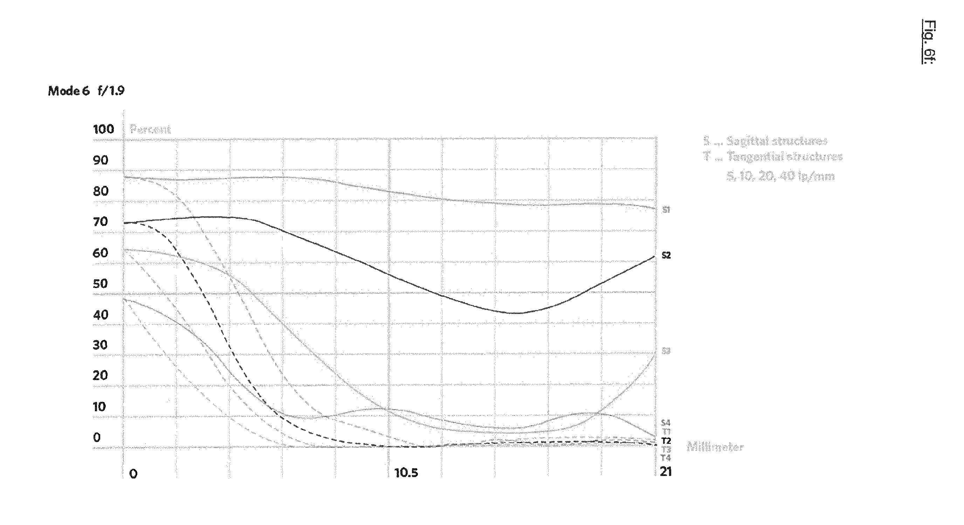

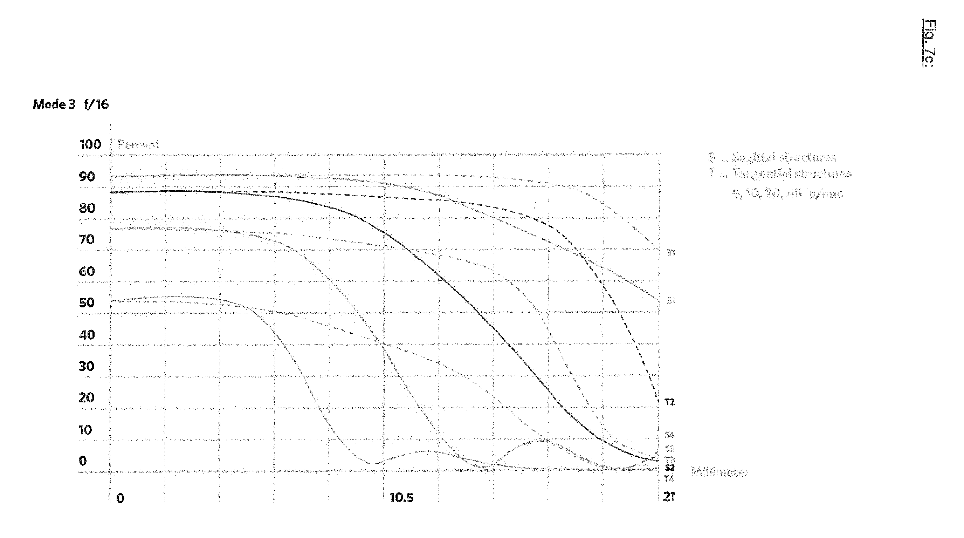

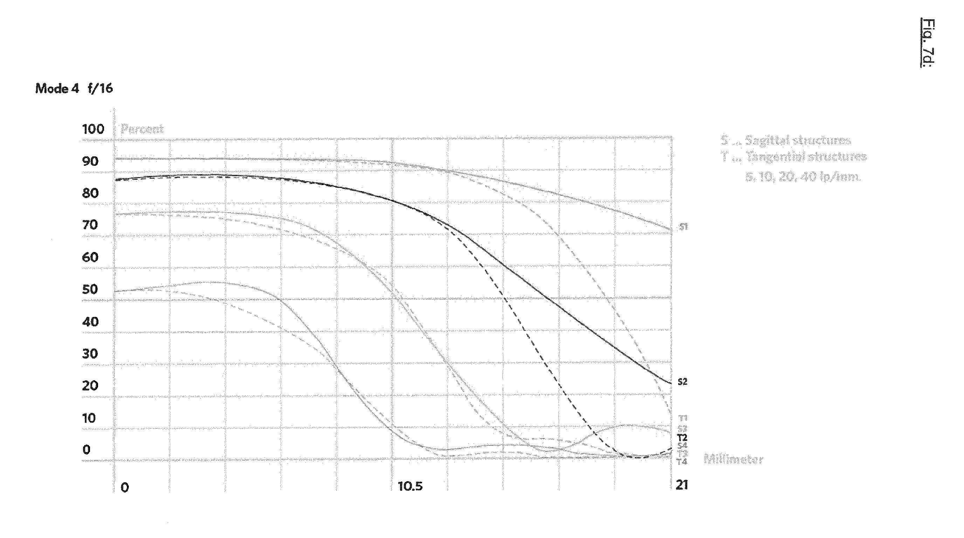

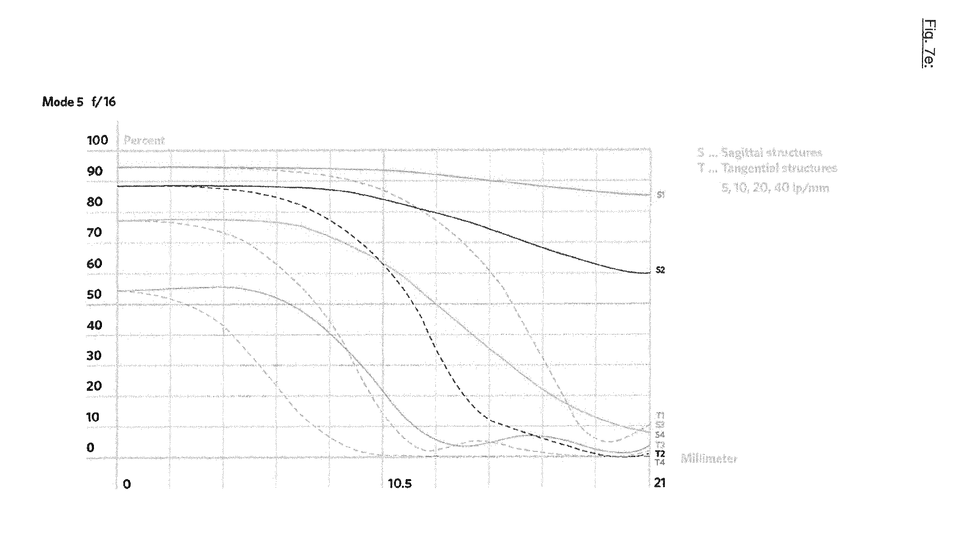

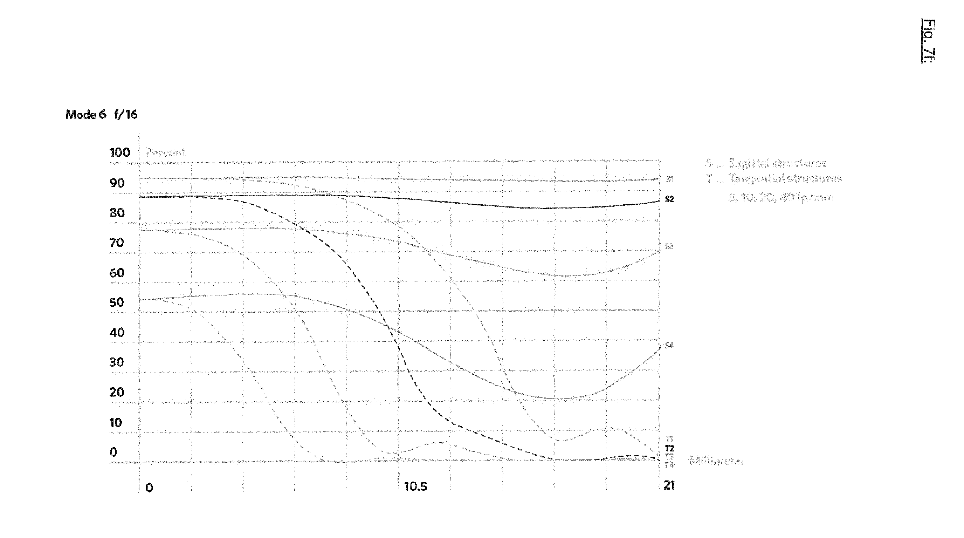

Anhand der MTF-Diagramme ist erkennbar, dass die zur gleichen Auflösung gehörenden Sagittal- und Tangentialkurven Abstände voneinander aufweisen, die grundsätzlich den optischen Eindruck und die Aberrationen charakterisieren, wobei bei unterschiedlichem Abstand der ersten Linsengruppe LG1 von der zweiten Linsengruppe LG2 auch ein unterschiedliches Bokeh gegeben ist, was anhand der unterschiedlichen Kurven S1, T1, S2, T2, S3, T3, S4, T4 in den einzelnen Figuren 6 und 7 erkennbar ist.

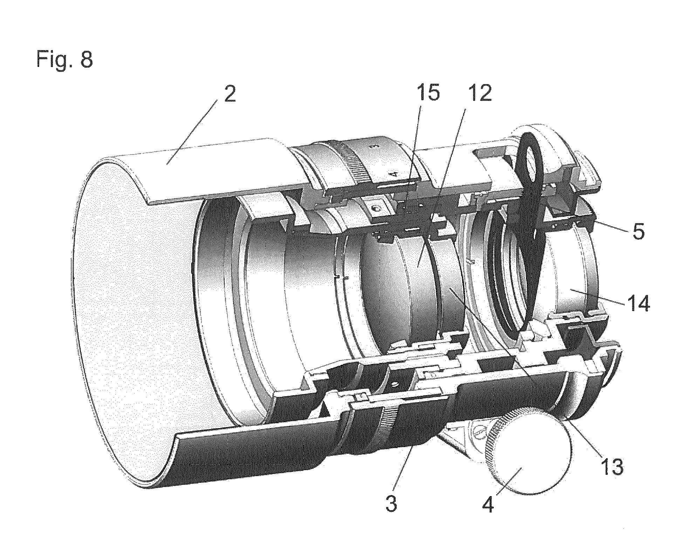

Die Figur 8 zeigt eine Schnittdarstellung einer perspektivischen Ansicht eines erfindungsgemäßen Objektivs 1, bei der erkennbar ist, dass die Verstellvorrichtung 15 über mechanische Haltevorrichtungen verfügt, mit denen die Fassungen 12 und 13 für die erste Linse 7 und die zweite Linse 8 der ersten Linsengruppe LG1 entlang der Längsachse des Objektivs 1 verschoben werden können. Die Verschiebung erfolgt dabei über einen am Gehäuse drehbar gelagerten Drehring 3. Während der Veränderung des Abstands d zwischen erster Linsengruppe LG1 und zweiter Linsengruppe LG2 ist die zweite Linsengruppe LG2 im Gehäuse 2 fixiert. Für das Scharfstellen über das Stellrad 4 werden die Fassungen 12, 13 und die Fassung 14 für die erste Linse 9 und die zweite Linse 10 der zweiten Linsengruppe LG2 parallel verschoben, wobei auch die Aperturblende 5 mitverschoben wird.

## Patentansprüche

1. Objektiv zu veränderbaren Einstellung der Aberrationen, umfassend:
- eine erste Linsengruppe (LG1) mit einer ersten Linse (7) positiver Brechkraft und mit einer zweiten Linse (8) negativer Brechkraft,
- eine zweite Linsengruppe (LG2) mit einer ersten Linse (9) negativer Brechkraft und mit einer zweiten Linse (10) positiver Brechkraft, wobei die erste Linsengruppe (LG1) der Objektseite (O) zugewandt ist und die zweite Linsengruppe (LG2) der Bildseite (B) zugewandt ist,
**dadurch gekennzeichnet, dass** eine Verstellvorrichtung (15) vorgesehen ist, durch die der Abstand (d) zwischen der ersten Linsengruppe (LG1) und der zweiten Linsengruppe (LG2) veränderbar einstellbar ist.

2. Objektiv nach Anspruch 1, **dadurch gekennzeichnet, dass** zur Veränderung des Abstands (d) die zweite Linsengruppe (LG2) im Objektiv (1) fixiert ist und die erste Linsengruppe (LG1) verschiebbar im Objektiv (1) gelagert ist.

3. Objektiv nach Anspruch 1 oder 2, **dadurch gekennzeichnet, dass** die erste Linsengruppe (LG1) aus zwei Linsen (7, 8) besteht und/oder die zweite Linsengruppe (LG2) aus zwei Linsen (9, 10) besteht.

4. Objektiv nach einem der Ansprüche 1 bis 3, **dadurch gekennzeichnet, dass** die erste Linse (9) und die zweite Linse (10) der zweiten Linsengruppe (LG2) zu einer Doppellinse verklebt sind.

5. Objektiv nach einem der Ansprüche 1 bis 4, **dadurch gekennzeichnet, dass** die erste Linse (7) und die zweite Linse (8) der ersten Linsengruppe (LG1) beabstandet voneinander angeordnet sind.

6. Objektiv nach Anspruch 5, **dadurch gekennzeichnet, dass** der Abstand (d) der ersten Linse (7) von der zweiten Linse (8) unveränderlich ist.

7. Objektiv nach einem der Ansprüche 1 bis 6, **dadurch gekennzeichnet, dass** die erste Linse (7) der ersten Linsengruppe (LG1) der Objektseite (O) zugewandt ist.

8. Objektiv nach einem der Ansprüche 1 bis 7, **dadurch gekennzeichnet, dass** die erste Linse (9) der zweiten Linsengruppe (LG2) der Objektseite (O) zugewandt ist.

9. Objektiv nach einem der Ansprüche 1 bis 8, **dadurch gekennzeichnet, dass** die erste Linse (9) der zweiten Linsengruppe (LG2) ein Meniskus mit negativer Brechkraft ist und/oder die erste Linse (7) der ersten Linsengruppe (LG1) eine plankonvexe Linse mit positiver Brechkraft ist.

10. Objektiv nach einem der Ansprüche 1 bis 9, **dadurch gekennzeichnet, dass** die zweite Linse (10) der zweiten Linsengruppe (LG2) eine bikonvexe Linse positiver Brechkraft ist und/oder die zweite Linse (8) der ersten Linsengruppe (LG1) eine plankonkave Linse mit negativer Brechkraft ist.

11. Objektiv nach einem der Ansprüche 1 bis 10, **dadurch gekennzeichnet, dass** zwischen der ersten Linsengruppe (LG1) und der zweiten Linsengruppe (LG2) eine, vorzusgweise auswechselbare, Blende (5) angeordnet ist.

12. Objektiv nach einem der Ansprüche 1 bis 11, **dadurch gekennzeichnet, dass** die Verstellvorrichtung (15) einen drehbar am Gehäuse (2) gelagerten Verstellring (3) umfasst.

13. Objektiv nach einem der Ansprüche 1 bis 12, **dadurch gekennzeichnet, dass** der Abstand (d) der ersten Linsengruppe (LG1) von der zweiten Linsengruppe (LG2) stufenweise veränderbar ist.

14. Objektiv nach einem der Ansprüche 1 bis 13, **dadurch gekennzeichnet, dass** der Abstand (d) der ersten Linsengruppe (LG1) von der zweiten Linsengruppe (LG2) in einem Ausmaß von 6 bis 20 mm, vorzugsweise von 10 bis 16 mm, ganz vorzugsweise in einem Ausmaß von 12 mm, veränderbar ist.

15. Objektiv nach einem der Ansprüche 1 bis 14, **dadurch gekennzeichnet, dass** eine zweite Verstellvorrichtung (6) vorgesehen ist, durch die die erste Linsengruppe (LG1) und die zweite Linsengruppe (LG2) zum Scharfstellen gemeinsam relativ zum Gehäuse (2) des Objektivs (1) verschiebbar sind.
